# EUROPÄISCHE PATENTANMELDUNG

(11) **EP 0 566 012 A1**
(43) Veröffentlichungstag der Anmeldung: **20.10.1993**
(21) Anmeldenummer: 93105735.0
(22) Anmeldetag: 07.04.1993
(51) Int. Cl.: E21B 33/13, C04B 16/04

(54) **Tiefbohrzement und Verfahren zu seiner Herstellung**

(30) Priorität: 14.04.1992 DE 4212437; 01.02.1993 DE 4302737
(71) Anmelder: SICOWA Verfahrenstechnik für Baustoffe GmbH & Co. KG, D-52072 Aachen (DE)
(72) Erfinder: Rudert, Volkhart, Dr. rer. nat., W-6501 Stadecken (DE); Hermann, Adalbert, Dr. rer. nat., W-4540 Lengerich (DE); Oberste-Padtberg, Rüdiger, Dr. rer. nat., W-5600 Wuppertal 1 (DE)
(74) Vertreter: Sparing Röhl Henseler Patentanwälte

(57) **Zusammenfassung**

Die Erfindung betrifft einen Tiefbohrzement aus einem hydraulischen Bindemittel und gegebenenfalls Zusatzmittel und Zusatzstoffen. Um bei niedriger Dichte eines hieraus hergestellten Schlamms hohe Festigkeiten zu erzielen, wird Kunststoffpulver in einer Menge von etwa 50 bis 800 kg/m³ Schlamm beigemischt, wobei das Kunststoffpulver aus zähharten oder spröden, laugenbeständigen Teilchen mit eine Korngröße kleiner etwa 2 mm besteht, die nicht oder wenig gefüllt sind und ihre Zugfestigkeit mindestens erst etwa 10°C über der jeweiligen maximalen statischen Bohrlochtemperatur drastisch verringern.

## Beschreibung

Die Erfindung betrifft einen Tiefbohrzement aus einem hydraulischen Bindemittel und gegebenenfalls Zusatzmittel und Zusatzstoffen sowie ein Verfahren zu seiner Herstellung.

Beim Tiefbohren werden Schlämme aus Wasser und einem sich verfestigenden Mittel durch das Futterrohr in das Bohrloch hinuntergepumpt, steigen zwischen Bohrlochwand und Bohrgestänge wieder nach oben und verfestigen sich dort. Das Schlammlitergewicht wird entsprechend den im Bohrloch angetroffenen Druck- und Stabilitätsverhältnissen eingestellt. Im allgemeinen hat der Schlamm um so schwerer zu sein, je tiefer er zur Anwendung gelangt. Dort, wo das Gebirge eventuell durch den hydrostatischen Druck aufbrechen kann oder bereits vorher aufgebrochen ist, so daß Schlamm eindringen kann, benötigt man einen möglichst leichten Schlamm. Dies ist beispielsweise für die Zementation der ersten Futterrohrtouren bei off-shore-Bohrungen notwendig. Bei Zementationen besonders langer Futterrohrtouren (> 1 km) kann die Beanspruchung der Rohre durch den Innendruck kritisch werden, so daß deswegen Leichtschlamme erforderlich werden.

Neben solchen technischen Zwängen gibt es gelegentlich wirtschaftliche Erwägungen, nach denen für sogenannte Leadslurries zementärmere Leichtschlämme genommen werden.

Leichtschlämme zur Bohrlochzementation mit einer Dichte kleiner 1,7 kg/l, wie sie etwa bei Formationen mit unzureichender Eigenfestigkeit verwendet werden, werden durch Mischen von Bentonit, Trass, Kieselgur, Wasserglas o.dgl. mit Zement und viel Wasser hergestellt. Diese haben den Nachteil, daß die Festigkeitsentwicklung und Dichtigkeit gering sind. Es ist auch (vgl. E.B.Nelson, WELL CEMENTING, Elsevier 1990, S. 3-14) zur Vermeidung eines hohen Wasser/Zement-Wertes bekannt, Stoffe mit niedriger Korndichte etwa in Form von Glas- oder Keramikhohlkugeln (microspheres) zuzusetzen. Diese haben sich jedoch wegen ihres hohen Preises nicht durchgesetzt und haben zudem den Nachteil, daß sie bei hoher physikalischer Beanspruchung zerbrechen können und dann nicht mehr zur Verringerung des Schlammlitergewichts beitragen.

Aufgabe der Erfindung ist es, einen Tiefbohrzement und ein Verfahren zu seiner Herstellung nach den Oberbegriffen der Ansprüche 1 und 10 zu schaffen, die es ermöglichen, einen Schlamm niedriger Dichte herzustellen, mit dem eine hohe Druckfestigkeit und Dichtigkeit erzielt wird.

Diese Aufgabe wird dadurch gelöst, daß Kunststoffpulver in einer Menge entsprechend etwa 50 bis 800 kg Kunststoffpulver pro m³ Schlamm beigemischt wird, wobei das Kunststoffpulver aus zähharten oder spröden, laugenbeständigen Teilchen mit eine Korngröße kleiner etwa 2 mm besteht, die nicht oder wenig gefüllt sind und ihre Zugfestigkeit mindestens erst etwa 10°C über der jeweiligen maximalen statischen Bohrlochtemperatur drastisch verringern.

Es können daher zähharte und/oder spröde amorphe Thermoplasten, die eine Glastemperatur, und teilkristalline Thermoplasten, die eine Kristallit-Schmelztemperatur, und nicht oder wenig gefüllte Duroplasten verwendet werden, die eine Zersetzungstemperatur mindestens etwa 10°C über der jeweiligen maximalen statischen Bohrlochtemperatur aufweisen.

Hierbei kommen daher nur solche in Wasser unlösliche Kunststoffe infrage, die unter den Temperaturbedingungen im Bohrloch nicht oder zumindest nicht so stark weich werden, daß sie kleben. Außerdem kommen nicht oder nur wenig gefüllte Kunststoffe mit einer Rohdichte (etwa ≦ 1,1 g/cm³) im wesentlichen entsprechend dem spezifischen Gewicht des jeweiligen reinen Kunststoffs infrage, um die Rohschlammdichte gering halten zu können. Die Verwendung von allenfalls wenig gefülltem Kunststoff ist möglich, weil die damit hergestellten, hochwässrige Suspensionen bildenden Schlämme bis zum Einsatzort laufend bewegt werden und eine Viskosität derart aufweisen, daß sie pumpfähig sind und ein Aufschwimmen der Kunststoffteilchen gerade nicht stattfindet. Insbesondere sind die Schlämme im Meerwasserbereich anwendbar und durch Verwendung von Meerwasser als Anmachwasser herstellbar.

Hierdurch lassen sich Schlämme mit einer Dichte kleiner 1,7 kg/l herstellen, die aufgrund der hydraulischen Bindung eine genügende Festigkeit liefern und zugleich kostengünstig sind, und zwar insbesondere dann, wenn das Kunststoffpulver aus zerkleinertem Abfallkunststoff, und zwar insbesondere aus nicht sortenreinem Kunststoff aus Siedlungsabfällen, der üblicherweise wenig gefüllt ist, besteht. Letzterer setzt sich beispielsweise hauptsächlich aus Polypropylen, Polyethylen, die beide im allgemeinen ca. 90% ausmachen, und Polystyrol zusammen. Polypropylen und Polyethylen sind teilkristalline Thermoplaste mit einer Glastemperatur T_{g} < 0°C, deren Gebrauchsbereich zwischen T_{g} und der Schmelztemperatur der Kristallite Tₘ liegt. Bei Schlämmen mit einer Dichte im Bereich von etwa 1,40 kg/l kann man im allgemeinen mit einem Wasser/Feststoff-Verhältnis (Wasser-Feststoffwert) ≧ 0,5 und bei Schlämmen mit einer Dichte im Bereich von etwa 1,20 kg/l mit einem Wasser-Feststoffwert ≧ 0,35 arbeiten.

Das aus Abfällen stammende Kunststoffpulver wird zweckmäßigerweise durch Zerkleinern von geschmolzenen und miteinander verschmolzenen Kunststoffabfällen hergestellt. Zum Schmelzen und miteinander Verschmelzen eignet sich insbesondere ein Autoklavieren der Kunststoffabfälle in Form von kompakten, zusammenhaltenden, porösen Gebinden mit hohem Wasseraufnahmevermögen in Wasserdampfatmosphäre bei etwa 160 bis 220°C. Vor dem Schmelzen kann ein Vorzerkleinern zweckmäßig sein.

Insbesondere wird gemischtkörniges Kunststoffpulver verwendet, das vorzugsweise eine Körnung aufweist, bei der mindestens 90% der Teilchen kleiner 1 mm sind. Da beim Zerkleinern des Kunststoffs gewöhnlich praktisch kein Feinstkorn anfällt, kann es zweckmäßig sein, mineralische Stäube und/oder Mehle, beispielsweise Quarzmehl oder Flugasche, als Zusatzstoffe in einer Menge bis ca. 20 Gew.-% des Kunststoffpulvers einzubringen. Allgemein beträgt die Menge des Kunststoffpulvers mindestens etwa 80% der Zusatzstoffe.

Der hergestellte Schlamm kann etwa 200 bis 1200 kg/m³ hydraulisches Bindemittel und etwa 50 bis 800 kg/m³ Kunststoffpulver enthalten.

Als hydraulisches Bindemittel kommt Portlandzement, Hüttenzement, Tonerdezement oder ähnliche Zemente, gegebenenfalls eine Mischung von wenigstens zwei dieser Zementarten infrage. Ferner kommen als hydraulische Bindemittel Zementersatzstoffe wie gemahlener Hüttensand gegebenenfalls in Mischung und gegebenenfalls in Mischung mit einem oder mehreren der vorstehenden Zementarten infrage.

Normalerweise ist ein Faseranteil des Kunststoffpulvers wegen des hierdurch gewöhnlich vergrößerten Wasseranspruchs nicht erwünscht. Dieser vergrößerte Wasseranspruch erklärt sich aus einer durch die Fasern bewirkten Verfilzung, wobei die entstehenden Zwickel Überschußwasser festhalten. Überraschenderweise werden trotz der sich daraus ergebenden hohen Wasser/Zement-Werte (sh. nachfolgende Beispiele 1 und 2) für den Anwendungsbereich ausreichende Festigkeiten erzielt. Dennoch sollte der Faseranteil im Kunststoffpulver zur Darstellung von Schlammlitergewichten kleiner oder gleich 1,3 kg/l möglichst kleiner 10 Gew.-%, insbesondere < 5 Gew.-% sein.

Für bestimmte Anwendungsfälle kann es jedoch vorteilhaft sein, größere Mengenanteile von Fasern, insbesondere bis 25 Gew.-%, im Kunststoffpulver zu haben, so beispielsweise für Schlämme zum Abdichten von solchen Klüften und Schichtfugen, die Verluste bei der Ringraumzementierung bewirken.

Zur Herabsetzung des Wasseranspruchs des hydraulischen Bindemittels kann ein Verflüssiger zugesetzt werden. Der Zusatz eines Mittels zur Erhöhung der Wasserbenetzbarkeit des Kunststoffpulvers etwa in Form von Tensiden mit hydrophilen und hydrophoben Gruppen ist ebenfalls vorteilhaft, um eine möglichst homogene Suspension und damit einen möglichst gleichmäßigen Wasseranspruch zu erzielen.

Weitere Zusatzmittel wie erstarrungsregulierende Mittel, Mittel zur Verminderung der Gaspermeabilität (etwa Latexsuspensionen), Mittel zur Regulierung des Wasserrückhaltevermögens etc. können zugesetzt werden.

Das Kunststoffpulver kann mit dem hydraulischen Bindemittel und eventuellen Zusatzmitteln und Zusatzstoffen eine Trockenmischung bilden, es kann aber auch während der Herstellung des Schlamms zugemischt werden.

### Beispiel 1

Ein Leichtschlamm, um am Nordseeboden hohe Frühfestigkeit zu erzielen, in einer Menge von 1m³ und mit einer Dichte von 1,6 kg/l wird hergestellt aus:
800 kg Portlandzement PZ 55 gemäß DIN 1164
440 kg Meerwasser
214 kg Kunststoffpulver (45% Polypropylen, 45% Polyethylen, 10% Polystyrol, Körnung < 2mm mit 90% < 1mm, Wasseranspruch 150%)
3 kg Verflüssiger
0,3 kg Entschäumer
Bei 10°C ergibt sich nach 12 h eine Frühfestigkeit von ca. 2 MPa und schließlich eine Endfestigkeit von ca. 25 MPa.

(Hierbei ist der Wasseranspruch bestimmt worden, indem 10,0 g Substanz auf 0,1 g genau abgewogen und quantitativ in einen nassen Faltenfilter überführt wird. Die Probe wird mit 100 ml entsalztem Wasser übergossen. Das überschüssige Wasser läuft durch den Filter ab und wird in einem 100 ml Meßzylinder aufgefangen. - Die Messung ist bei inerten Substanzen beendet, wenn nach mehrmaligem Durchlaufenlassen des Filtrates keine Änderung in der durchgelaufenen Filtratmenge eintritt. - Die Differenz von 100 ml zum abgelesenen Filtratvolumen wird mit 10 multipliziert und ergibt den Wasseranspruch in Prozent.)

### Beispiel 2

Ein Leichtschlamm in einer Menge von 1m³ mit einer Dichte von 1,3 kg/l wird hergestellt aus:
500 kg Zement API 10 Class G
313 kg Kunststoffpulver gemäß Beispiel 1
500 kg Frischwasser
1,3 kg Verflüssiger
0,25 kg Entschäumer
Hierbei ergibt sich eine Festigkeit von ca. 7 MPa im Temperaturbereich bis 100°C.

In dem beigefügten Diagramm ist auf der Ordinate die einaxiale Druckfestigkeit in MPa und auf der Abszisse die Dichte des Schlamms aufgetragen. Das Diagramm enthält Kurven bezüglich der Endfestigkeiten bei Temperaturen kleiner 100°C, wobei Kurve A durch Zusatz von 25% Traß in der Dichte herabgesetzte Schlämme, Kurve B durch Zusatz von Glashohlkugeln in der Dichte herabgesetzte Schlämme und Kurve C durch Zusatz von Kunststoffpulver in der Dichte herabgesetzte Schlämme gemäß der Erfindung betreffen. Die Festigkeitserhöhung im untersuchten Dichtebereich gegenüber bekannten Tiefbohrzementen ist deutlich erkennbar.

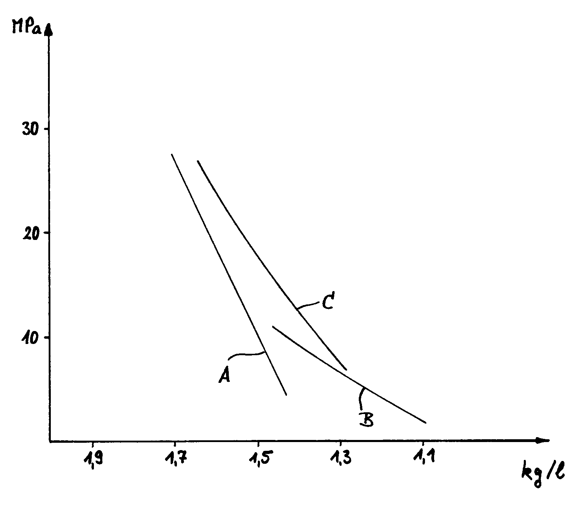

## Patentansprüche

1. Tiefbohrzement aus einem hydraulischen Bindemittel und gegebenenfalls Zusatzmittel und Zusatzstoffen, dadurch **gekennzeichnet**, daß Kunststoffpulver in einer Menge entsprechend etwa 50 bis 800 kg Kunststoffpulver pro m³ Schlamm beigemischt ist, wobei das Kunststoffpulver aus zähharten oder spröden, laugenbeständigen Teilchen mit eine Korngröße kleiner etwa 2 mm besteht, die nicht oder wenig gefüllt sind und ihre Zugfestigkeit mindestens erst etwa 10°C über der jeweiligen maximalen statischen Bohrlochtemperatur drastisch verringern.

2. Tiefbohrzement nach Anspruch 1, dadurch gekennzeichnet, daß das Kunststoffpulver gemischtkörnig ist.

3. Tiefbohrzement nach Anspruch 1 oder 2, dadurch gekennzeichnet, daß das Kunststoffpulver eine Körnung aufweist, die überwiegend, vorzugsweise mindestens 90% Teilchen kleiner 1 mm umfaßt.

4. Tiefbohrzement nach einem der Ansprüche 1 bis 3, dadurch gekennzeichnet, daß das Kunststoffpulver aus zerkleinertem Abfallkunststoff besteht.

5. Tiefbohrzement nach Anspruch 4, dadurch gekennzeichnet, daß das Kunststoffpulver aus nicht sortenreinem Kunststoff aus Siedlungsabfällen besteht.

6. Tiefbohrzement nach einem der Ansprüche 1 bis 5, dadurch gekennzeichnet, daß mineralische Stäube und/oder Mehle als Zusatzstoffe in einer Menge bis ca. 20 Gew.-% des Kunststoffpulvers enthalten sind.

7. Tiefbohrzement nach einem der Ansprüche 1 bis 6, dadurch gekennzeichnet, daß als hydraulisches Bindemittel Portlandzement, Hüttenzement oder Tonerdezement, gegebenenfalls als Mischung von wenigstens zwei Zementarten enthalten ist.

8. Tiefbohrzement nach Anspruch 7, dadurch gekennzeichnet, daß als hydraulisches Bindemittel eine Zementersatzstoff, insbesondere gemahlener Hüttensand, das den Zement bzw. die Zementmischung mindestens teilweise ersetzt, enthalten ist.

9. Tiefbohrzement nach einem der Ansprüche 1 bis 8, dadurch gekennzeichnet, daß ein Faseranteil des Kunststoffpulvers kleiner 10, insbesondere kleiner 5 Gew.-% des Kunststoffanteils vorhanden ist.

10. Tiefbohrzement nach einem der Ansprüche 1 bis 9, dadurch gekennzeichnet, daß ein Faseranteil im Kunststoffpulver < 25 Gew.-% vorhanden ist.

11. Verfahren zur Herstellung eines Tiefbohrzementschlamm aus Wasser, einem hydraulischen Bindemittel und gegebenenfalls Zusatzmittel und Zusatzstoffen, dadurch **gekennzeichnet**, daß ein Schlamm mit einer Dichte kleiner 1,7 kg/l hergestellt wird, der Kunststoffpulver in einer Menge entsprechend etwa 50 bis 800 kg Kunststoffpulver pro m³ Schlamm enthält, wobei das Kunststoffpulver aus zähharten oder spröden, laugenbeständigen Teilchen mit eine Korngröße kleiner etwa 2 mm besteht, die nicht oder wenig gefüllt sind und ihre Zugfestigkeit mindestens erst etwa 10°C über der jeweiligen maximalen statischen Bohrlochtemperatur drastisch verringern.

12. Verfahren nach Anspruch 11, dadurch gekennzeichnet, daß ein Verflüssiger zugesetzt wird.

13. Verfahren nach Anspruch 11 oder 12, dadurch gekennzeichnet, daß ein Mittel zur Erhöhung der Wasserbenetzbarkeit des Kunststoffpulvers zugesetzt wird.

14. Verfahren nach einem der Ansprüche 11 bis 13, dadurch gekennzeichnet, daß gemischtkörniges Kunststoffpulver verwendet wird.

15. Verfahren nach einem der Ansprüche 11 bis 14, dadurch gekennzeichnet, daß Kunststoffpulver mit einer Körnung verwendet wird, bei der mindestens 90% der Teilchen kleiner 1 mm sind.

16. Verfahren nach einem der Ansprüche 11 bis 15, dadurch gekennzeichnet, daß Kunststoffpulver hergestellt aus zerkleinertem Abfallkunststoff verwendet wird.

17. Verfahren nach Anspruch 16, dadurch gekennzeichnet, daß Kunststoffpulver hergestellt aus nicht sortenreinem Kunststoff aus Siedlungsabfällen verwendet wird.

18. Verfahren nach einem der Ansprüche 11 bis 17, dadurch gekennzeichnet, daß mineralische Stäube und/oder Mehle als Zusatzstoffe in einer Menge bis ca. 20 Gew.-% des Kunststoffpulvers zugesetzt werden.

19. Verfahren nach einem der Ansprüche 11 bis 18, dadurch gekennzeichnet, daß als hydraulischen Bindemittel Portlandzement, Hüttenzement oder Tonerdezement, gegebenenfalls als Mischung von wenigstens zwei Zementarten, verwerdet wird.

20. Verfahren nach Anspruch 19, dadurch gekennzeichnet, daß als hydraulisches Bindemittel ein Zementersatzstoff, insbesondere gemahlener Hüttensand, ist, der den Zement bzw. Zementmischung mindestens teilweise ersetzt.

21. Verfahren nach einem der Ansprüche 11 bis 20, dadurch gekennzeichnet, daß Kunststoffpulver mit einem Faseranteil kleiner 10, insbesondere kleiner 5 Gew.-% des Kunststoffanteils verwendet wird.

22. Verfahren nach einem der Ansprüche 11 bis 20, dadurch gekennzeichnet, daß Kunststoffpulver mit einem Faseranteil kleiner 25 Gew.-% des Kunststoffanteils verwendet wird.
